# FASCICULE DE BREVET EUROPEEN

(11) **EP 4 011 744 B1**
(45) Date de publication et mention de la délivrance du brevet: **05.07.2023**
(21) Numéro de dépôt: 21212705.4
(22) Date de dépôt: 07.12.2021
(51) Int. Cl.: B61G 5/10, H01R 13/74, H02G 3/22, H01R 9/24

(54) **DISPOSITIF DE RACCORDEMENT HAUTE TENSION POUR VÉHICULE DE TRANSPORT, NOTAMMENT FERROVIAIRE, CAISSE DE VÉHICULE ET VÉHICULE COMPRENANT UN TEL DISPOSITIF**
HOCHSPANNUNGSANSCHLUSSVORRICHTUNG FÜR TRANSPORTFAHRZEUG, INSBESONDERE SCHIENENFAHRZEUG, FAHRZEUGAUFBAU UND FAHRZEUG MIT EINER SOLCHEN VORRICHTUNG
HIGH-VOLTAGE CONNECTION DEVICE FOR A TRANSPORT VEHICLE, IN PARTICULAR A RAILWAY VEHICLE, VEHICLE BODY AND VEHICLE COMPRISING SUCH A DEVICE

(30) Priorité: 08.12.2020 FR 2012831
(43) Date de publication de la demande: 15.06.2022
(73) Titulaire: ALSTOM Transport Technologies, 93400 Saint-Ouen (FR)
(72) Inventeur: FUHRMANN, Renaud, 90800 Bavilliers (FR)
(74) Mandataire: Lavoix

(56) Documents cités:
- EP-A1- 2 808 951
- EP-A2- 1 137 105
- CN-U- 209 683 458
- JP-A- H 089 538
- US-A- 5 197 903

## Description

La présente invention concerne un dispositif de raccordement haute tension pour véhicule de transport, notamment ferroviaire, une caisse de véhicule et un véhicule comprenant un tel dispositif de raccordement.

Dans le domaine des véhicules de transport faisant intervenir des courants électriques de haute tension, les sources d'énergie et les charges électriques sont généralement séparées les unes des autres et sont reçues dans des compartiments différents, notamment pour des raisons de sécurité. Selon des exemples, la source d'énergie est une batterie embarquée, comme dans une automobile électrique, ou bien une source stationnaire, comme pour un véhicule ferroviaire, auquel cas le véhicule comprend un dispositif de captage d'énergie tel qu'un pantographe. La charge électrique est par exemple un transformateur, un moteur ou un autre équipement du véhicule. Chaque charge électrique est reliée à une source électrique au moyen d'un raccordement, qui permet de traverser au moins une cloison délimitant les compartiments tout en assurant une bonne isolation électrique.

Il est connu de percer un trou dans une cloison et d'y faire passer un câble haute tension. Un tel câble, qui comprend des éléments conducteurs de section importante car adaptée aux hautes tensions, est généralement peu flexible, présente un rayon de courbure minimal et reste encombrant de part et d'autre de la cloison traversée. Le montage et/ou le démontage du câble sont en outre délicats.

CN-209-683-458-U décrit un boitier de raccordement haute tension pour automobile électrique, comprenant des borniers amont et aval reliés l'un à l'autre par des membres conducteurs. Ce boitier n'est pas configuré pour traverser une cloison.

EP-2808951-A1 décrit un dispositif de raccordement selon le préambule de la revendication 1.

C'est à ces problèmes qu'entend plus particulièrement remédier l'invention, en proposant un dispositif de raccordement haute tension qui soit plus pratique d'utilisation.

À cet effet, l'invention concerne un dispositif de raccordement selon la revendication 1.

Grâce à l'invention, chaque boitier est monté sur la platine et permet un raccordement électrique de part et d'autre de la cloison. Chaque boitier est monté ou démonté de la platine de montage indépendamment de l'autre boitier, ce qui facilite la connexion ou la déconnexion de la source électrique ou de la charge électrique. Les câbles connectés aux boitiers sont disposés parallèlement à la cloison traversée, le dispositif de raccordement étant ainsi peu encombrant même si les câbles sont peu flexibles.

Selon des aspects avantageux mais non obligatoires de l'invention, un tel dispositif de raccordement peut incorporer une ou plusieurs des caractéristiques suivantes prises isolément ou selon toute combinaison techniquement admissible :
- le premier boitier et le deuxième boitier définissent chacun une direction de connexion propre de câbles associés respectivement aux premier et deuxième terminaux de connexion, les directions de connexion étant parallèles entre elles et parallèles au plan médian.
- Le premier boitier et le deuxième boitier sont montés de manière réversible sur la platine de montage.
- Le premier boitier et le deuxième boitier sont identiques l'un à l'autre.
- Chaque membre conducteur est relié de manière réversible au premier terminal et au deuxième terminal correspondants.
- Chaque membre conducteur comprend une portion centrale reçue dans le passage lorsque le dispositif de raccordement est fixé sur la cloison, chaque portion centrale étant recouverte d'un manchon réalisé en un matériau isolant.

L'invention concerne aussi une caisse de véhicule, comprenant :
- une cloison définissant un plan moyen et comprenant une ouverture qui définit un plan moyen et,
- un dispositif de raccordement tel que défini précédemment,
dans laquelle la platine de montage est fixée à la cloison et obture au moins en partie l'ouverture, le plan médian étant aligné avec le plan moyen.

L'invention concerne enfin un véhicule de transport, notamment ferroviaire, comprenant une caisse telle que définie précédemment.

L'invention sera mieux comprise, et d'autres avantages de celle-ci apparaîtront plus clairement à la lumière de la description qui va suivre, de deux modes de réalisation d'un dispositif de raccordement, d'une caisse et d'un véhicule de transport conformes à son principe, donnée uniquement à titre d'exemple et faite en référence aux dessins annexés, dans lesquels :
- [Fig 1] la figure 1 représente schématiquement une section d'un véhicule de transport comprenant un dispositif de raccordement conforme à un premier mode de réalisation de l'invention ;
- [Fig 2] la figure 2 est une vue en perspective éclatée du dispositif de raccordement de la figure 1 ;
- [Fig 3] la figure 3 est une vue du détail III de la figure 1, représentant schématiquement en coupe le dispositif de raccordement de la figure 1, et
- [Fig 4] la figure 4 est une vue, analogue à la figure 3, d'un dispositif de raccordement conforme à un deuxième mode de réalisation de l'invention.

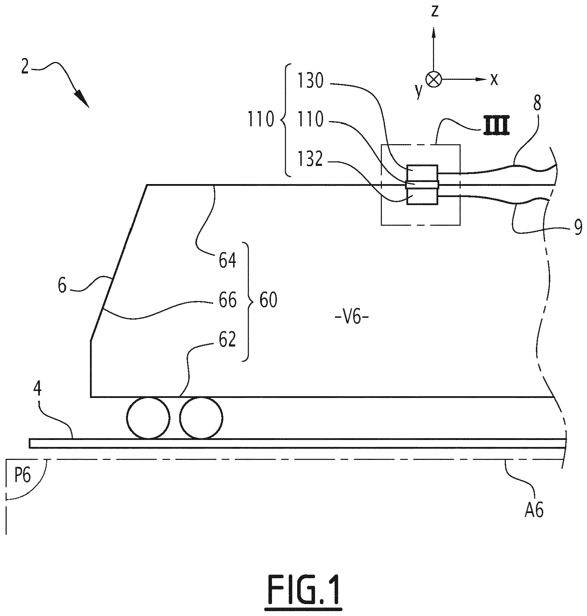

Un véhicule de transport 2 est représenté sur la figure 1. Le véhicule de transport 2 est ici un véhicule ferroviaire, qui circule sur des rails. Un seul rail 4, qui est supposé être rectiligne et horizontal, est représenté sur la figure 1. En variante, le véhicule 2 est un véhicule de transport routier, voire maritime ou aérien.

Le véhicule 2 comprend une caisse 6. La caisse 6 présente une forme allongée qui définit un axe longitudinal A6, qui est ici parallèle au rail 4. Le véhicule 2 est représenté en coupe suivant un plan longitudinal P6, qui est vertical et parallèle à l'axe longitudinal A6.

La caisse 6 comprend un assemblage de plusieurs cloisons 60, qui délimitent un compartiment intérieur V6 de la caisse 6. Dans l'exemple illustré, les cloisons 60 comprennent un plancher 62, un toit 64 et une cloison d'extrémité 66. Le plancher 62 et le toit 64 sont reliés l'un à l'autre par des cloisons latérales. Les cloisons latérales, qui sont ici parallèles au plan longitudinal P6, ne sont pas représentées. Les cloisons 60 représentées sont des cloisons externes, qui séparent l'extérieur de la caisse 6 du compartiment intérieur V6. Les cloisons 60 comprennent généralement des panneaux réalisés en un matériau métallique, par exemple de l'acier ou un alliage d'aluminium.

Le véhicule 2 comprend un dispositif de raccordement 100, qui est monté sur l'une des cloisons 60. Dans l'exemple illustré, le dispositif de raccordement 100 est monté sur le toit 64. Le dispositif de raccordement 100 permet de relier électriquement un premier équipement électrique haute tension, situé d'un premier côté de la cloison 60 sur laquelle le dispositif de raccordement 100 est monté, à un deuxième équipement électrique haute tension, situé du côté opposé du premier équipement électrique. Par haute tension, on entend des tensions électriques continues supérieures à 400 Volts, ou bien des tensions électriques alternatives supérieures à 1500 Volts. Autrement dit, le dispositif de raccordement 100 permet de traverser la cloison 60 sur laquelle le dispositif de raccordement 100 est monté.

À titre d'exemple non limitatif, le premier équipement électrique, représenté par un câble référencé 8, est un dispositif de captage d'énergie électrique tel qu'un pantographe, tandis que le deuxième équipement électrique, représenté par un câble électrique référencé 9, est un transformateur. Les câbles 8 et 9 ne font pas partie de l'invention mais servent à en préciser le fonctionnement.

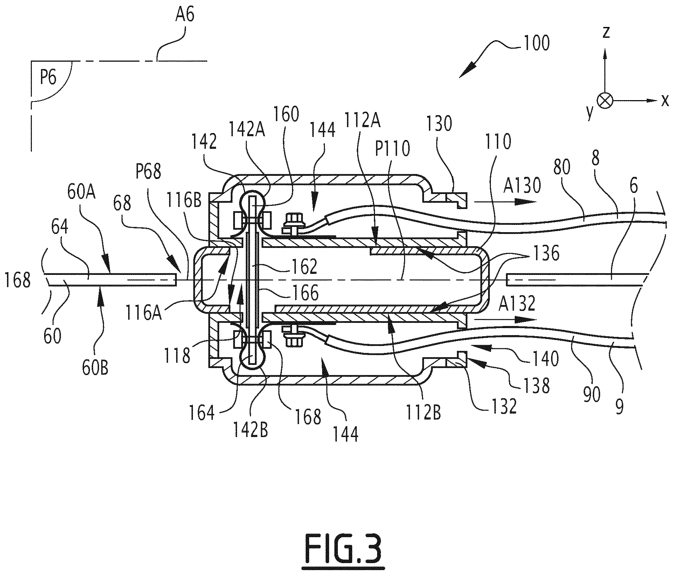

Le câble 8 comprend des brins 80, chaque brin 80 étant électriquement isolé des autres brins 80 et étant associé à une phase respective du premier équipement. De manière analogue, le câble 9 comprend des brins 90, chacun associé à une phase respective du deuxième équipement. Le premier équipement électrique et le deuxième équipement électrique comprennent chacun un même nombre de phases électriques. Autrement dit, le câble 8 et le câble 9 comprennent chacun le même nombre de brins 80 et 90, chaque brin 80 étant électriquement connecté à un brin 90 respectif. Dans l'exemple illustré, le dispositif de raccordement 100 est configuré pour être connecté à des câbles 8 et 9 comprenant chacun trois brins 80 et 90, cependant un seul brin 80 et un seul brin 90 sont représentés sur la figure 3.

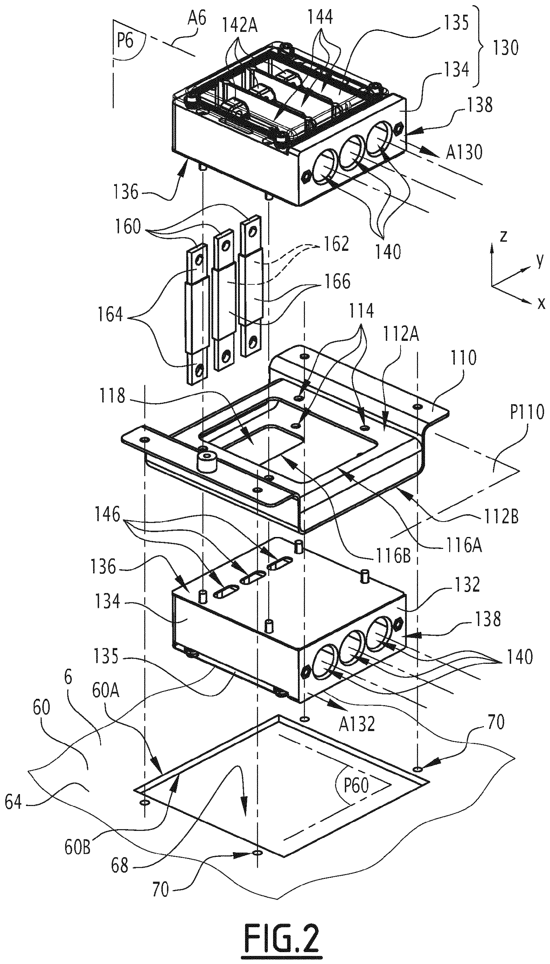

La cloison 60 comprend une face extérieure 60A et une face intérieure 60B, visibles sur les figures 2 et 3. La face intérieure 60B est ici orientée du côté du compartiment intérieur V6. Une ouverture 68 est ménagée dans la cloison 60 à l'endroit où le dispositif de raccordement 100 est fixé à la cloison 60. L'ouverture 68 relie l'une à l'autre la face deux faces 60A et 60B. L'ouverture 68 présente ici un contour rectangulaire, d'autre formes d'ouverture 68 étant bien entendu possibles. L'ouverture 68 est de préférence ménagée dans une portion plane de la cloison 60, définissant un plan moyen P68. Par commodité, on définit un axe Z qui est orthogonal à la cloison 60 à l'endroit de montage du dispositif de raccordement 100, autrement dit orthogonal au plan moyen P68. On définit aussi un axe X et un axe Y de manière que les axes X, Y et Z forment ensemble un repère orthonormé direct. Les axes X et Y sont ainsi parallèles au plan moyen P68. Dans l'exemple illustré, le dispositif de raccordement 100 est monté sur le toit 64 et l'axe Z est un axe vertical. La description est faite en référence à l'orientation du dispositif de raccordement 100 sur les dessins, alors que dans la réalité le dispositif de raccordement 100 peut être orienté autrement, par exemple lorsque le dispositif de raccordement est monté sur une cloison latérale de la caisse 6.

Le dispositif de raccordement 100 comprend une platine de montage 110, un premier boitier 130 et un deuxième boitier 132.

La platine de montage 110 est réalisée en métal, par exemple par pliage et soudage d'une tôle métallique. La platine de montage 110 est configurée pour être fixée sur la cloison 60, la platine 110 présentant une forme coopérant avec l'ouverture 68 de manière que l'ouverture 68 est au moins en partie obturée par la platine de montage 110. La platine de montage 110 définit un plan médian P110, qui est confondu avec le plan moyen P68 lorsque la platine 110 est montée sur la cloison 60.

La fixation de la platine de montage 110 sur la cloison 60 est de préférence réversible, et se fait au moyen d'organes de fixation, tels que des vis, coopérant avec des alésages 70 ménagés dans la cloison 60. Les organes de fixation ne sont pas représentés. Avantageusement, un opérateur fixe la platine de montage 110 à la cloison 60 en intervenant d'un seul côté de la cloison 60, par exemple du côté de la face extérieure 60A. La platine 110 est électriquement reliée à la cloison 60, par exemple au moyen d'une tresse métallique.

La platine 110 comprend deux zones de montage 112A et 112B, qui sont situées de part et d'autre du plan médian P110 et chacune orientée à l'opposé du plan médian P110. Chaque zone de montage 112A ou 112B comprend ici une portion plane parallèle au plan médian P110. En configuration assemblée, la zone de montage 112A est orientée dans le même sens que la face extérieure 60A, tandis que la zone de montage 112B est orientée dans le même sens que la face extérieure 60B. Des alésages 114 sont ménagés dans chacune des zones de montage 112A et 112B, pour permettre la fixation du premier boitier 130 et du deuxième boitier 132, tel qu'expliqué plus loin dans la présente description.

Un lumière 116A est ménagé dans une portion centrale de la zone de montage 112A, tandis qu'une lumière 116B est ménagée dans une portion centrale de la zone de montage 112B. Les lumières 116A et 116B présentent ici chacune une forme de rectangle aux angles arrondis. Les lumières 116A et 116B sont alignées l'une avec l'autre suivant une direction orthogonale au plan médian P110 et définissent un passage 118, qui traverse la platine de montage 110 et qui débouche sur chacune des deux zones de montage 112A et 112B. Le passage 118 est donc un passage droit, qui est orienté orthogonalement au plan médian P110.

Le premier boitier 130 est monté sur la zone de montage 112A, tandis que le deuxième boitier 132 est monté sur la zone de montage 112B.

Le premier boitier 130 et le deuxième boitier 132 présentent une structure similaire l'une à l'autre et fonctionnent de la même façon. Ce qui est expliqué pour le premier boitier 130 est transposable au deuxième boitier 132. Le premier boitier 130 et le deuxième boitier 132 sont de préférence identiques l'un à l'autre, ce qui permet de réaliser des économies par standardisation.

Chaque boitier 130 ou 132 comprend un corps 134. Chaque corps 134 est fixé à une zone de montage 112A ou 112B respective. Le corps 134 est réalisé en un matériau rigide et électriquement isolant, par exemple en un matériau polymère synthétique. Le corps 134 est par exemple produit par injection à chaud.

Chaque boitier 130 ou 132 comprend ici un couvercle 135, qui est réalisé en un matériau isolant et qui est avantageusement transparent, de manière qu'un opérateur puisse visuellement inspecter les connexions électriques à l'intérieur des boitiers 130 ou 132, comme expliqué plus loin. Le couvercle 135 est par exemple réalisé en polycarbonate. Optionnellement un élément d'étanchéité, tel qu'un joint, assure l'étanchéité à l'eau entre le couvercle 135 et le corps 134 correspondant. L'élément d'étanchéité n'est pas représenté. Par « étanche à l'eau », on entend que l'eau provenant des intempéries ou l'eau de lavage, provenant d'un jet sous pression, ne peut s'infiltrer.

Chaque corps 134 présente une forme de parallélépipède, avec une face de montage 136 qui coopère avec une des zones de montage 112A ou 112B correspondante de manière à obturer entièrement la lumière 116A ou 116B ménagée dans la zone de montage 112A ou 112B. En particulier, les alésages 114 sont obturés lorsque le boitier 130 ou 132 est fixé à la zone de montage 112A ou 112B correspondante. Ainsi, le montage de chaque corps 134 sur la platine de montage 110 est avantageusement étanche à l'eau, c'est-à-dire que de l'eau ne peut s'infiltrer entre le corps 134 et la platine 110.

Chaque corps 134 comprend aussi une face avant 138, dans laquelle sont ménagés des trous 140. Les trous 140 sont configurés pour laisser passer les brins 80 ou 90. La face avant 138 est ici plane et orthogonale à l'axe X. La face avant 138 du premier boitier 130 définit une première direction de connexion A130, tandis que la face avant 138 du deuxième boitier 132 définit une deuxième direction de connexion A132. Les directions de connexion A130 et A132 sont représentées par des flèches sur les figures 2 et 3.

Les trous 140 sont de préférence munis d'organes d'étanchéité, tels que des soufflets en caoutchouc, pour empêcher les infiltrations d'eau le long des brins 80 ou 90. Les organes d'étanchéité ne sont pas représentés. Chaque corps 134 comprend autant de trous 140 que les câbles 8 ou 9 comprennent de brins 80 ou 90.

Dans le premier mode de réalisation de l'invention, les zones de montage 112A et 112B sont superposées suivant la direction de l'axe Z, de manière que lorsque les premier et deuxième boitiers 130 et 132 sont montés sur la zone de montage 112A ou 112B correspondante, les première et deuxième directions de connexion A130 et A132 sont parallèles l'une à l'autre et sont orientées dans le même sens. Le dispositif de raccordement 100 permet ainsi de relier les câbles 8 et 9 de manière compacte, sans contrainte d'encombrement liée à un rayon de courbure minimal de ces câbles 8 et 9.

Chaque brin 80 est électriquement connecté à un premier terminal 142A de connexion du premier boitier 130. De manière analogue, chaque brin 90 est électriquement connecté à un deuxième terminal 142B de connexion du deuxième boitier 132. Les premiers terminaux 142A sont électriquement isolés les uns des autres et forment ensemble un premier bornier du premier boitier 130. Les deuxième terminaux 142B sont électriquement isolés les uns des autres et forment ensemble un deuxième bornier du deuxième boitier 132. Les premiers et deuxièmes terminaux 142A et 142B sont aussi collectivement appelés « terminaux 142 ».

Chaque terminal 142A ou 142B est logé dans une alvéole 144 respective, qui est ménagée dans le corps 134 correspondant. Chaque terminal 142A ou 142B est réalisé en un matériau électriquement conducteur de préférence métallique, par exemple en cuivre ou un de ses alliages. Les terminaux 142 sont ici représentés par une lame métallique, cette forme n'étant pas limitative. En variante, chaque terminal 142A ou 142B est réalisé en une pièce métallique massive, par exemple en cuivre ou ses alliages, ou bien en aluminium ou ses alliages, formé par fonderie et/ou par usinage.

Chaque alvéole 144 débouche, d'une part, de la face avant 138 par les trous 140 et, d'autre part, de la face de montage 136 par des orifices 146. Les orifices 146 ont ici la forme de trous oblongs, qui s'étendent dans leur longueur parallèlement à l'axe Y. Lorsque le dispositif de raccordement 100 est en configuration assemblée, les orifices 146 débouchent dans le passage 118.

Le dispositif de raccordement 100 comprend des éléments conducteurs 160. Le dispositif de raccordement 100 comprend autant d'éléments conducteurs 160 que chacun des boitiers 130 ou 132 comprend de terminaux 142. Le dispositif de raccordement 100 comprend ici trois éléments conducteurs 160. Chaque terminal 142 du premier boitier 130 est relié à un terminal 142 correspondant du deuxième boitier 132 par l'intermédiaire d'un élément conducteur 160 respectif, qui traverse le fond 136 du premier boitier 130, le passage 118 de la platine 110 et le fond 136 du deuxième boitier 132.

Chaque élément conducteur 160 présente ici la forme d'un barreau rigide de forme parallélépipédique allongée, disposé dans sa longueur parallèlement à l'axe Z et comprenant une portion centrale 162 et deux extrémités 164 opposées. Les éléments conducteurs 160 sont réalisés en métal, par exemple en cuivre ou un de ses alliages.

Lorsque le dispositif de raccordement 100 est en configuration assemblée, la portion centrale 162 est reçue dans le passage 118 et traverse, sans les toucher, un des orifices 146 du premier boitier 130 et un des orifices 146 du deuxième boitier 132. Chaque portion centrale 162 est avantageusement recouverte d'un manchon 166, qui est réalisé en un matériau électriquement isolant tel que de la résine époxy. Ainsi chaque manchon 166 limite les risques de court-circuit entre, d'une part, l'élément conducteur 160 correspondant et, d'autre part, la platine 110 ou les boitiers 130 ou 132.

Chaque extrémité 164 est configurée pour être électriquement connectée à un terminal 142. Dans l'exemple illustré, chaque extrémité 164 est aussi mécaniquement fixée à un terminal 142 correspondant de manière réversible, au moyen d'un organe de fixation 168, qui est ici un boulon. Les éléments conducteurs 160 sont ainsi maintenus immobiles par rapport au reste du dispositif de raccordement 100, notamment lorsque le véhicule 2 est en mouvement.

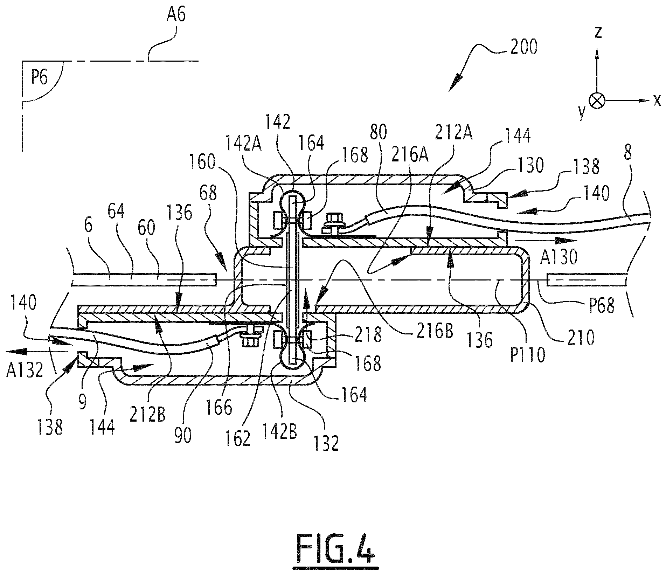

Un deuxième mode de réalisation du dispositif de raccordement est représenté en figure 4. Dans le deuxième mode de réalisation, les éléments analogues à ceux du premier mode de réalisation portent les mêmes références et fonctionnent de la même façon. Dans ce qui suit, on décrit principalement les différences entre les premier et deuxième modes.

Une des principales différences du deuxième mode de réalisation avec le premier mode est que dans le deuxième mode de réalisation, le dispositif de raccordement 200 comprend une platine de montage 210 spécifique. Les premier et deuxième boitiers 130 et 132, qui sont les mêmes dans les deux modes, sont montés tête-bêche, de manière que les première et deuxième directions de connexion A130 et A132 sont orientées à l'opposé l'une de l'autre.

La platine 210 définit un plan médian P210 et est configurée pour être fixée sur la cloison 60. En configuration assemblée, l'ouverture 68 est au moins en partie obturée par la platine de montage 210, le plan médian P210 étant aligné avec le plan moyen P68. La platine de montage 210 comprend deux zones de montage 212A et 212B, qui sont situées de part et d'autre du plan médian P210. Le premier boitier 130 est monté sur la zone de montage 212A, tandis que le deuxième boitier est monté sur la zone de montage 212B.

Chacune des deux zones de montage 212A et 212B comprend une lumière, respectivement référencée 216A et 216B, les lumières étant au moins en partie alignées suivant l'axe Z et définissant un passage 218, qui débouche sur chacune des deux zones de montage 212A et 212B.

Chaque premier terminal 142A est électriquement relié à un deuxième terminal 142B correspondant par un membre conducteur 160 respectif, chaque membre conducteur 160 étant logé dans le passage 218.

Dans le deuxième mode de réalisation de l'invention, les zones de montage 212A et 212B sont partiellement décalées l'une par rapport à l'autre parallèlement à l'axe X, de manière que lorsque les premier et deuxième boitiers 130 et 132 sont montés sur la zone de montage 112A ou 112B correspondante, les première et deuxième directions de connexion A130 et A132 sont parallèles l'une à l'autre et sont orientées à l'opposé l'une de l'autre.

Ainsi, simplement en changeant la platine de montage 110 du premier mode pour la platine 210 du deuxième mode, un opérateur peut inverser le sens de l'une des directions de connexion A130 ou A132, pour s'adapter aux appareils électriques à raccorder. Dans les deux modes de réalisation, le dispositif de raccordement 100 ou 200 aux câbles 8 ou 9 est peu encombrant, car indépendant d'un rayon de flexion minimal des câbles 8 ou 9. En outre, les dispositifs de raccordement 100 et 200 présentent une structure robuste, dont le montage et le démontage sont aisés. D'autre part, grâce aux membres conducteurs 160 immobiles par rapport au reste du dispositif de raccordement 100 ou 200 et comprenant un manchon isolant et grâce à une structure étanche à l'eau, les dispositifs de raccordement 100 ou 200 offrent une sureté de fonctionnement élevée.

Dans l'exemple illustré, le dispositif de raccordement 110 ou 210 est fixé au toit 64. Le toit 64 est une cloison 60 dite « externe », qui sépare le compartiment intérieur V6 de l'extérieur de la caisse 6.

En variante non représentée, les cloisons 60 incluent des cloisons internes, qui délimitent des portions internes du compartiment intérieur V6. Ces portions internes accueillent par exemple un moteur, un transformateur, etc. Un dispositif de raccordement 100 ou 200 peut être fixé à l'une des cloisons internes pour relier électriquement des équipements situés dans chacune des portions internes.

Les modes de réalisation et les variantes mentionnées ci-dessus peuvent être combinés entre eux pour générer de nouveaux modes de réalisation de l'invention.

## Revendications

1. Dispositif de raccordement (100 ; 200) haute tension pour traverser une cloison (60) de caisse (6) de véhicule (2) de transport, le dispositif de raccordement (100 ; 200) comprenant :
- au moins un premier terminal (142A) de connexion, chaque premier terminal étant configuré pour être électriquement connecté à une phase (80) respective d'un premier appareil électrique (8),
- au moins un deuxième terminal (142B) de connexion, chaque deuxième terminal étant configuré pour être électriquement connecté à une phase (90) respective d'un deuxième appareil électrique (9),
- au moins un membre conducteur (160), chaque premier terminal (142A) étant électriquement connecté à un deuxième terminal (142B) respectif par un membre conducteur (160) respectif,
- une platine de montage (110 ; 210), qui est configurée pour être fixée sur la cloison (60), la cloison (60) présentant une ouverture (68) propre à être au moins en partie obturée par la platine de montage (110 ; 210),
**caractérisé en ce que** :
- la platine de montage (110 ; 210) définit un plan médian (P110; P210) et comprend :
• deux zones de montage (112A, 112B ; 212A, 212B) situées de part et d'autre du plan médian (P110 ; P210),
• un passage (118 ; 218), qui traverse la platine de montage et qui débouche sur chacune des deux zones de montage,
**en ce que** le dispositif de raccordement (100 ; 200) comprend, en outre :
- un premier boitier (130), qui reçoit chaque premier terminal (142A) et qui est monté sur l'une des deux zones de montage (112A ; 212A),
- un deuxième boitier (132), qui reçoit chaque deuxième terminal (142B) et qui est monté sur l'autre des deux zones de montage (112B ; 212B),
et **en ce que** chaque membre conducteur (160) est logé dans le passage (118 ; 218).

2. Dispositif de raccordement (100 ; 200) selon la revendication précédente, dans lequel le premier boitier (130) et le deuxième boitier (132) définissent chacun une direction de connexion (A130, A132) propre de câbles associés respectivement aux premier et deuxième terminaux (142A, 142B) de connexion, les directions de connexion étant parallèles entre elles et parallèles au plan médian (P110 ; P210).

3. Dispositif de raccordement (100 ; 200) selon l'une quelconque des revendications précédentes, dans lequel le premier boitier (130) et le deuxième boitier (132) sont montés de manière réversible sur la platine de montage (110 ; 210).

4. Dispositif de raccordement (100 ; 200) selon l'une quelconque des revendications précédentes, dans lequel le premier boitier (130) et le deuxième boitier (132) sont identiques l'un à l'autre.

5. Dispositif de raccordement (100 ; 200) selon l'une quelconque des revendications précédentes, dans lequel chaque membre conducteur (160) est relié de manière réversible au premier terminal (142) et au deuxième terminal (142) correspondants.

6. Dispositif de raccordement (100 ; 200) selon l'une quelconque des revendications précédentes, dans lequel chaque membre conducteur (160) comprend une portion centrale (162) reçue dans le passage (118 ; 218) lorsque le dispositif de raccordement (100 ; 200) est fixé sur la cloison (60), chaque portion centrale (162) étant recouverte d'un manchon (166) réalisé en un matériau isolant.

7. Caisse de véhicule (2), comprenant :
- une cloison (60) comprenant une ouverture (68) qui définit un plan moyen (P68) et,
- un dispositif de raccordement (100 ; 200) selon l'une quelconque des revendications précédentes,
dans laquelle la platine de montage (110 ; 210) est fixée à la cloison (60) et obture au moins en partie l'ouverture (68), le plan médian (P110 ; P210) étant aligné avec le plan moyen (P68).

8. Véhicule (2) de transport, notamment ferroviaire, comprenant une caisse (6) selon la revendication précédente.

## Patentansprüche

1. Verbindungsvorrichtung (100; 200) für Hochspannung zum Durchqueren einer Trennwand (60) des Kastens (6) eines Transportfahrzeugs (2), die Verbindungsvorrichtung (100; 200) umfassend:
- mindestens einen ersten Verbindungsanschluss (142A), wobei jeder erste Anschluss konfiguriert ist, um elektrisch mit einer jeweiligen Phase (80) eines ersten elektrischen Geräts (8) verbunden zu werden,
- mindestens einen zweiten Verbindungsanschluss (142B), wobei jeder zweite Anschluss konfiguriert ist, um elektrisch mit einer jeweiligen Phase (90) eines zweiten elektrischen Geräts (9) verbunden zu werden,
- mindestens ein leitendes Element (160), wobei jeder erste Anschluss (142A) durch ein jeweiliges leitendes Element (160) elektrisch mit einem jeweiligen zweiten Anschluss (142B) verbunden ist,
- eine Montageplatte (110; 210), die konfiguriert ist, um an der Trennwand (60) befestigt zu werden, wobei die Trennwand (60) eine Öffnung (68) aufweist, die geeignet ist, um zumindest teilweise von der Montageplatte (110; 210) verschlossen zu werden,
**dadurch gekennzeichnet, dass**:
- die Montageplatte (110; 210) eine mediane Ebene (P110; P210) definiert und Folgendes umfasst:
· zwei Montagebereiche (112A, 112B; 212A, 212B), die sich auf beiden Seiten der medianen Ebene (P110; P210) befinden,
· einen Durchgang (118; 218), der die Montageplatte durchquert und in jeden der zwei Montagebereiche mündet,
dass die Verbindungsvorrichtung (100; 200) ferner Folgendes umfasst:
- ein erstes Gehäuse (130), das jeden ersten Anschluss (142A) aufnimmt und das an einem der zwei Montagebereiche (112A; 212A) montiert ist,
- ein zweites Gehäuse (132), das jeden zweiten Anschluss (142B) aufnimmt und an dem anderen der zwei Montagebereiche (112B; 212B) montiert ist,
und dadurch, dass jedes leitende Element (160) in dem Durchgang (118; 218) untergebracht ist.

2. Verbindungsvorrichtung (100; 200) nach dem vorherigen Anspruch, wobei das erste Gehäuse (130) und das zweite Gehäuse (132) jeweils eine eigene Verbindungsrichtung (A130, A132) definieren, die Kabeln eigen ist, die jeweils mit dem ersten und dem zweiten Anschluss (142A, 142B) assoziiert sind, wobei die Verbindungsrichtungen parallel zueinander und parallel zu der medianen Ebene (P110; P210) sind.

3. Verbindungsvorrichtung (100; 200) nach einem der vorherigen Ansprüche, wobei das erste Gehäuse (130) und das zweite Gehäuse (132) reversibel auf der Montageplatine (110; 210) montiert sind.

4. Verbindungsvorrichtung (100; 200) nach einem der vorherigen Ansprüche, wobei das erste Gehäuse (130) und das zweite Gehäuse (132) miteinander identisch sind.

5. Verbindungsvorrichtung (100; 200) nach einem der vorherigen Ansprüche, wobei jedes leitende Element (160) reversibel mit dem entsprechenden ersten Anschluss (142) und dem entsprechenden zweiten Anschluss (142) verbunden ist.

6. Verbindungsvorrichtung (100; 200) nach einem der vorherigen Ansprüche, wobei jedes leitende Element (160) einen mittleren Abschnitt (162) umfasst, der in dem Durchgang (118; 218) aufgenommen ist, wenn die Verbindungsvorrichtung (100; 200) an der Trennwand (60) befestigt ist, wobei jeder mittlere Abschnitt (162) mit einer Hülse (166) bedeckt ist, die aus einem isolierenden Material gefertigt ist.

7. Wagenkasten (2), umfassend:
- eine Trennwand (60), umfassend eine Öffnung (68), die eine mittlere Ebene (P68) definiert, und,
- eine Verbindungsvorrichtung (100; 200) nach einem der vorherigen Ansprüche,
wobei die Montageplatte (110; 210) an der Trennwand (60) befestigt ist und die Öffnung (68) zumindest teilweise verschließt, wobei die mediane Ebene (P110; P210) mit der mittleren Ebene (P68) ausgerichtet ist.

8. Transportfahrzeug (2), insbesondere Schienenfahrzeug, umfassend einen Kasten (6) nach dem vorherigen Anspruch.

## Claims

1. High-voltage connecting device (100; 200) for passing through a partition (60) of a body (6) of a transport vehicle (2), the connecting device (100; 200) comprising:
- at least one first connection terminal (142A), each first terminal being configured to be electrically connected to a respective phase (80) of a first electrical apparatus (8),
- at least one second connection terminal (142B), each second terminal being configured to be electrically connected to a respective phase (90) of a second electrical apparatus (9),
- at least one conductive member (160), each first terminal (142A) being electrically connected to a respective second terminal (142B) by a respective conductive member (160),
- a mounting plate (110; 210), which is configured to be fixed to the wall (60), the wall (60) having an opening (68) suitable for being at least partially closed by the mounting plate (110; 210),
**characterised in that**:
- the mounting plate (110; 210) defines a median plane (P110; P210) and comprises:
· two mounting areas (112A, 112B; 212A, 212B) located on either side of the median plane (P110; P210),
• a passage (118; 218), which passes through the mounting plate and opens out into each of the two mounting areas,
**in that** the connecting device (100; 200) further comprises:
- a first housing (130), which receives each first terminal (142A) and is mounted on one of the two mounting areas (112A; 212A),
- a second housing (132), which receives each second terminal (142B) and is mounted on the other of the two mounting areas (112B; 212B),
and **in that** each conductive member (160) is housed in the passage (118; 218).

2. Connecting device (100; 200) according to the preceding claim, in which the first box (130) and the second box (132) each define their own connection direction (A130, A132) of cables associated respectively with the first and second connection terminals (142A, 142B), the connection directions being parallel to each other and parallel to the median plane (P110; P210).

3. Connecting device (100; 200) according to any of the preceding claims, wherein the first housing (130) and the second housing (132) are reversibly mounted on the mounting plate (110; 210).

4. Connecting device (100; 200) according to any of the preceding claims, wherein the first housing (130) and the second housing (132) are identical to each other.

5. Connecting device (100; 200) according to any of the preceding claims, wherein each conductive member (160) is reversibly connected to the corresponding first terminal (142) and second terminal (142).

6. Connecting device (100; 200) according to any one of the preceding claims, wherein each conductive member (160) comprises a central portion (162) received in the passageway (118; 218) when the connecting device (100; 200) is secured to the wall (60), each central portion (162) being covered by a sleeve (166) made of an insulating material.

7. Vehicle body (2), comprising:
- a partition (60) comprising an opening (68) which defines a mean plane (P68) and,
- a positive locking device (100; 200) according to any of the preceding claims;
wherein the mounting plate (110; 210) is attached to the wall (60) and at least partially closes the opening (68), the median plane (P110; P210) being aligned with the median plane (P68).

8. A transport vehicle (2), in particular a railway vehicle, comprising a body (6) according to the preceding claim.
